# NEUE EUROPÄISCHE PATENTSCHRIFT

(11) **EP 2 090 485 B2**
(45) Veröffentlichungstag und Bekanntmachung des Hinweises auf die Entscheidung über den Einspruch: **28.01.2015**
(45) Hinweis auf die Patenterteilung: 22.12.2010
(21) Anmeldenummer: 08169601.5
(22) Anmeldetag: 21.11.2008
(51) Int. Cl.: B60T 13/74

(54) **Parkbremse**
Parking brake
Frein de stationnement

(30) Priorität: 12.02.2008 DE 102008000280
(43) Veröffentlichungstag der Anmeldung: 19.08.2009
(73) Patentinhaber: ZF Friedrichshafen AG, 88038 Friedrichshafen (DE)
(72) Erfinder: Pilzweger, Hans, 94152 Neuhaus/Inn (DE)
(74) Vertreter: Gebhard, Wolfgang

(56) Entgegenhaltungen:
- EP-A- 1 424 256
- WO-A-2004/022394
- WO-A1-98/50711
- DE-A1- 19 751 431
- DE-A1-102006 056 346
- DE-B3- 10 361 042
- US-A1- 2004 238 299

## Beschreibung

Die vorliegende Erfindung bezieht sich auf einen Traktor mit einer Parkbremse.

Aus dem Stand der Technik sind unterschiedliche Parkbremsensysteme bekannt. Zum einen existieren mechanische Handbremsen, bei denen die Bremse über ein Hebelsystem mit einer vom Fahrer ausgeübten Kraft eingelegt wird. Hierbei entsteht jedoch der Nachteil, dass durch die Abkühlung der Bremse bzw. der Bremslamellen diese Kraft absinken kann, wodurch und das Fahrzeug ins Rollen geraten kann. Zudem wird bei derartigen Systemen die Bremskraft durch den Fahrer definiert, was dazu führt, dass die Bremse immer mit unterschiedlicher Kraft eingelegt wird. Dies resultiert darin, dass ein sicherer Halt an Steigungen nicht immer gewährleistet sein kann.

Bei Traktoren ist beispielsweise bekannt, bei großen Steigungen oder Gefällen eine mechanische Handbremse als Parkbremse zu verwenden, welche über einen Hebel und Bowdenzüge vom Fahrer betätigt bzw. eingelegt wird und das gleiche Bremssystem, wie die Betriebsbremse verwendet. Hierbei ist das Bremssystem als nasse Lamellenbremse ausgeführt, die sich im Betrieb des Traktors bis auf ca. 80°C erwärmt.

Wird nun das Fahrzeug abgestellt und vom Fahrer die mechanische Handbremse mit einer vom Fahrer definierten Kraft eingelegt, so kommt es oft vor, dass diese Kraft beim Abkühlen der Bremse bzw. der Bremslamellen sinkt, was ein Rollen des Fahrzeugs zur Folge haben kann, da der Fahrer nicht abschätzen kann, wie stark die Bremse bei warmen Lamellen angezogen werden muss, damit das Fahrzeug sicher gehalten werden kann.

Beim Anfahren am Berg muss der Fahrer gleichzeitig das Kupplungspedal und die Handbremse bedienen, wobei die Kupplung in einem bestimmten Verhältnis losgelassen werden muss; gleichzeitig muss die Handbremse ausgelegt werden, damit das Fahrzeug nicht unbeabsichtigt nach hinten rollt. Diese Vorgehensweise erfordert vom Fahrer viel Geschick und kann in ein ungewolltes Zurückrollen des Fahrzeugs resultieren.

Zum anderen sind mechanische Parksperren bekannt, bei denen eine mechanische Klinke in ein Klinkenrad eingreift, wobei die Betätigung der Parksperre in der Regel hydraulisch oder pneumatisch erfolgt. Beispielsweise ist aus der DE 199 33 618 A1 der Anmelderin eine Parksperrenvorrichtung für ein Automatgetriebe bekannt, umfassend ein Parksperrenrad, das eine Verzahnung aufweist, wobei in die Verzahnung eine Sperrklinke einrastbar ist, indem die Sperrklinke auf einer einen Sperrkegel aufweisenden Sperreinrichtung geführt in Sperrstellung drehbar ist. Der Sperrkegel ist hierbei gegen eine Federeinrichtung verschiebbar auf einem Verbindungselement zu einer Rastenscheibe einer Wählwelle angeordnet. Eine mechanische Parksperre ist in nachteiliger Weise ein zusätzliches System in einem Fahrzeug, kann nicht für andere Anwendungen verwendet werden und benötigt relativ viel Bauraum.

Aus der DE 197 51 431 A1 ist eine elektromechanische Feststellbremse bekannt, die separat zu einer Betriebsbremse ist.

Aus der DE 10313634 A1 ist eine automobilgesteuerte automatische Handbremse bekannt, welche eine elektronische Steuerung umfasst, die mit einem Zündschalter bzw. mit einer Antriebsvorrichtung verbunden ist, wobei beim Parken des Fahrzeuges und beim Ausschalten des Zündschalters durch die elektronische Steuerung die Antriebsvorrichtung automatisch ausgeschaltet bzw. beim Anlassen des Motors des Fahrzeuges automatisch eingeschaltet wird. Hierbei ist vorgesehen, dass mit der Antriebsvorrichtung das Bremskabel des Handbremsapparates angespannt wird, um die Räder des Fahrzeuges zu blockieren; beim Anlassen des Motors des Fahrzeuges wird das Bremskabel mittels der Antriebsvorrichtung losgelöst, um die Bremsen des Fahrzeugs zu entriegeln. Durch die automatische Verriegelung beim Parken und die automatische Entriegelung beim Anlassen des Verbrennungsmotors soll ein versehentliches Vergessen der Betätigung der Bremse vermieden werden.

Der vorliegenden Erfindung liegt die Aufgabe zugrunde, einen Traktor mit einer Parkbremse anzugeben, durch die die Bremse stets mit einer vorgegebenen Kraft eingelegt werden und eingelegt bleiben kann. Insbesondere soll sich ein Abkühlen der Bremse bzw. der Bremslamellen nicht auf die Bremskraft auswirken.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Traktor mit einer Parkbremse vorgeschlagen, welche zumindest eine elektrisch betätigbare Einrichtung zum Einlegen der Parkbremse mit vorgegebener Kraft und zum Lösen der Parkbremse umfasst, welche bei einem Nachlassen der Bremskraft die Parkbremse nachzieht.

Gemäß einer ersten Ausführungsform der Erfindung kann die elektrisch betätigbare Einrichtung als elektrisch betätigtbarer Seilzieher ausgeführt sein, über den die Parkbremse vorzugsweise per Knopfdruck über einen Bowdenzug bzw. ein Handbremsseil mit vorgegebener Kraft ein- und ausgelegt werden kann. Hierbei ist der Bowdenzug bzw. das Handbremsseil mit einem auf zumindest einen Radbremszylinder wirkenden Hebelsystem bzw. Hebel verbunden. Der Hebel ist vorzugsweise mit einer Welle drehfest verbunden, welche über zwei Koppelelemente auf die Radbremszylinder wirkt. Gemäß der Erfindung ist für den Antrieb des Seilziehers ein selbsthemmendes Schneckengetriebe vorgesehen, so dass gewährleistet ist, dass sich die Bremse bei einem Spannungsausfall im Bordnetz nicht lösen kann.

Des weiteren ist erfindungsgemäß vorgesehen, dass die Bremskraft des Bremssystems über den elektrisch betätigbaren Seilzieher auch bei einem Abkühlen der Bremse stets auf dem vorgegebenen Wert gehalten wird, da die Bremse mittels des Seilziehers ohne Einwirkung des Fahrers nachgezogen wird, sobald die vorgegebene Bremskraft sinkt.

Besonders vorteilhaft ist es, wenn der Seilzieher als Zweifach -Seilzieher ausgeführt ist, der gleichzeitig zwei Handbremsseile bzw. Bowdenzüge betätigen kann. Hierbei entfällt die Notwendigkeit einer Welle, die über zwei Koppelelemente auf die Radbremszylinder wirkt, da jedes Handbremsseil bzw. jeder Bowdenzug auf einen jeweils mit einem Radbremszylinder wirkverbundenen Hebel wirkt.

Gemäß einer weiteren Ausführungsform der Erfindung ist die elektrisch betätigbare Einrichtung als linearer elektromechanischer Aktuator ausgeführt, der mit einem auf zumindest einen Radbremszylinder wirkenden Hebelsystem bzw. Hebel verbunden ist.

Im Rahmen einer vorteilhaften Weiterbildung der Erfindung wird vorgeschlagen, das Anfahren am Berg dadurch zu erleichtern, dass die Parkbremse anhand der Signale eines (in der Regel ohnehin vorhandenen) Wegsensors am Kupplungspedal des Traktors proportional zum Weg des Kupplungspedals gelöst wird. Durch diese Vorgehensweise wird das Anfahren am Berg in vorteilhafter Weise automatisiert und ein ungewolltes Rollen des Traktors nach hinten verhindert.

Vorzugsweise soll die Parkbremse nach einer zuvor definierten Zeitspanne, beispielsweise 10 Sekunden, nachdem der Fahrer den Traktorsitz verlassen hat, automatisch aktiviert werden. Dies kann über einen Sitzschalter ausgeführt werden.

Durch die erfindungsgemäße Konzeption wird gewährleistet, dass die Parkbremse stets mit gleicher Kraft eingelegt wird und auch mit gleicher Kraft eingelegt bleibt, da bei einem Nachlassen der Bremskraft die Bremse automatisch nachgezogen wird.

Des weiteren wird durch das automatisierte Anfahren der Fahrer entlastet und die Sicherheit erhöht. Zudem wird in der Fahrerkabine bzw. im Innenraum des Traktors durch den Entfall des Handbremshebels (die erfindungsgemäße Parkbremse wird per Knopfdruck betätigt) Raum für weitere Komponenten zur Verfügung gestellt. Ein weiterer Vorteil besteht darin, dass mechanische Parksperrensysteme entfallen können, wodurch die Herstellungs- und Montagekosten reduziert werden.

Die Erfindung wird im folgenden anhand der beigefügten Figuren beispielhaft näher erläutert. Es zeigen:
- Figur 1:: Eine Seitenansicht des Getriebes und der Hinterachse eines Traktors, welcher eine gemäß der Erfindung ausgeführte Bremse aufweist;
- Figur 2:: Eine Ansicht der Hinterachse und eines Teiles des Getriebes eines Traktors, welcher eine gemäß der Erfindung ausgeführte Bremse aufweist;
- Figur 3:: Eine schematische Draufsicht der Hinterachse und eines Teiles des Getriebes eines Traktors, welcher eine gemäß einer weiteren Ausführungsform der Erfindung ausgeführte Parkbremse aufweist; und
- Figur 4:: Eine Seitenansicht der Hinterachse der in Figur 3 gezeigten Ausführungsform

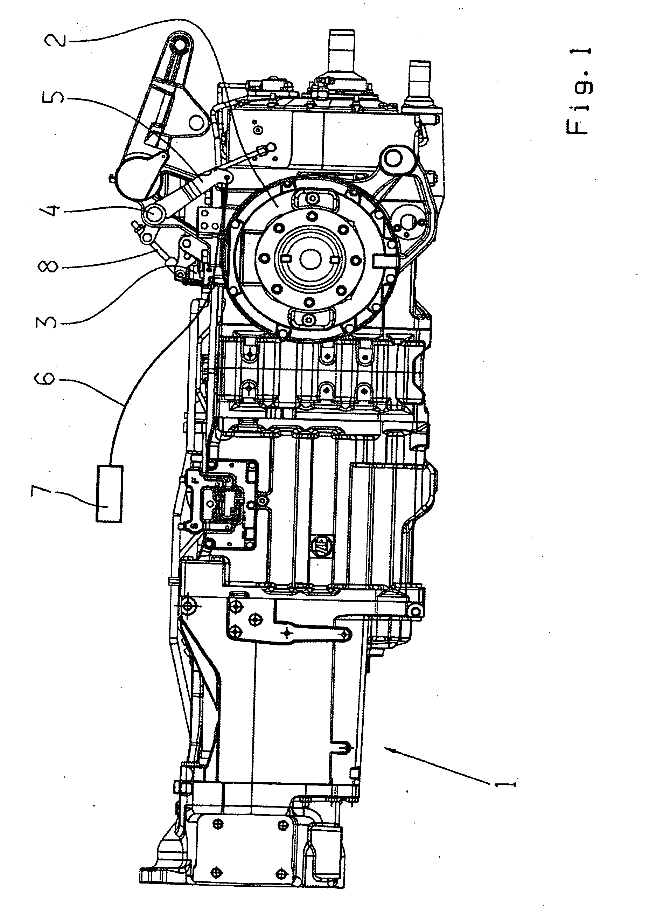

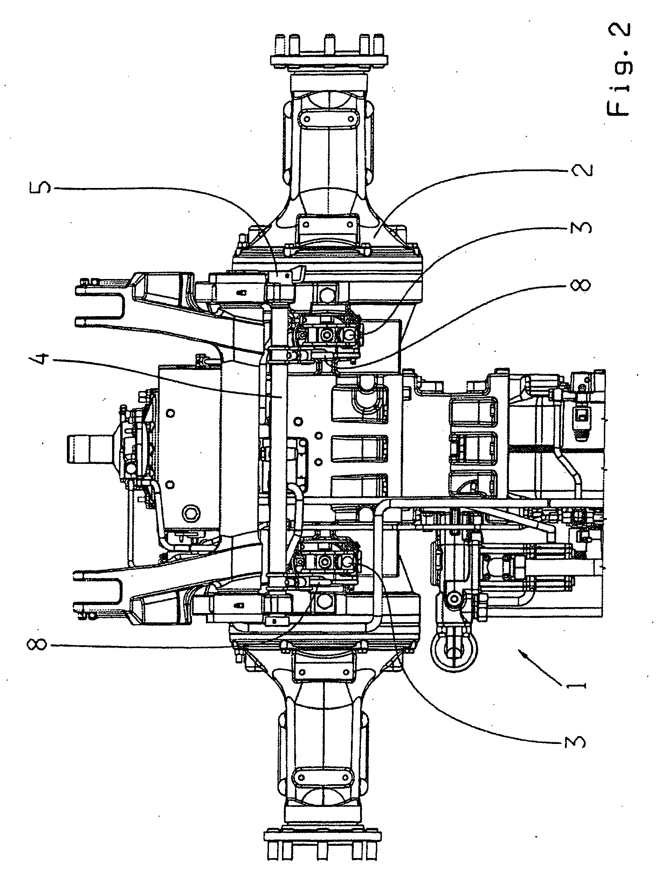

In Figuren 1 und 2 ist das Getriebe eines Traktors mit 1 bezeichnet; es ist abtriebsseitig mit der Hinterachse 2 verbunden. Die Hinterachse 2 umfasst für jedes Rad eine nasse Lamellenbremse, bei der die Kraft durch einen Radbremszylinder 3 auf die Bremse übertragen wird. Gemäß der Erfindung weist die Parkbremse einen elektrisch betätigbaren Seilzieher 7 auf, über den die Parkbremse per Knopfdruck über einen Bowdenzug 6 bzw. ein Handbremsseil mit vorgegebener Kraft ein- und ausgelegt werden kann.

Hierbei ist der Bowdenzug 6 bzw. das Handbremsseil mit einem Hebelsystem verbunden, welches einen mit dem Bowdenzug 6 bzw. mit dem Handbremsseil verbundenen Hebel 5 umfasst, welcher mit einer Welle 4 drehfest verbunden ist, wobei die Welle 4 über zwei Koppelelemente 8 auf die Radbremszylinder wirkt. Der Antrieb des Seilziehers 7 ist als selbsthemmendes Schneckengetriebe ausgeführt, um zu gewährleisten, dass sich die Bremse bei einem Spannungsausfall im Bordnetz nicht lösen kann.

Die erfindungsgemäße Parkbremse ist durch Betätigung eines Knopfes bzw. eines Schalters mit vorgegebener Kraft einlegbar und auch lösbar, wobei die Bremse mittels des Seilziehers 7 ohne Einwirkung des Fahrers nachgezogen wird, sobald die vorgegebene Bremskraft sinkt.

Alternativ zum elektrisch betätigbaren Seilzieher 7 in Verbindung mit einem Bowdenzug 6 bzw. mit einem Handbremsseil kann ein vorzugsweise linearer elektromechanischer Aktuator vorgesehen sein, welcher mit dem Hebelsystem verbunden ist. Beispielsweise kann der Aktuator als elektromotorisch angetriebenes Spindelgetriebe ausgeführt sein, dessen Gewindespindel mit dem Hebel des Hebelsystems verbunden ist.

Im Rahmen einer weiteren Ausgestaltung der Erfindung kann vorgesehen sein, dass anstelle des Hebelsystems und der Welle für jeden Radbremszylinder ein Hebel vorgesehen ist, welcher einerseits mit einem Bowdenzug bzw. Handbremsseil bzw. mit einem linearen elektromechanischen Aktuator verbunden und andererseits mit dem Radbremszylinder wirkverbunden ist. Hierbei ist jedem Hebel ein Bowdenzug bzw. Handbremsseil bzw. ein linearer elektromechanischer Aktuator zugeordnet. Erfindungsgemäß kann jedem Bowdenzug bzw. Handbremsseil ein separater Einfach - Seilzieher zugeordnet sein.

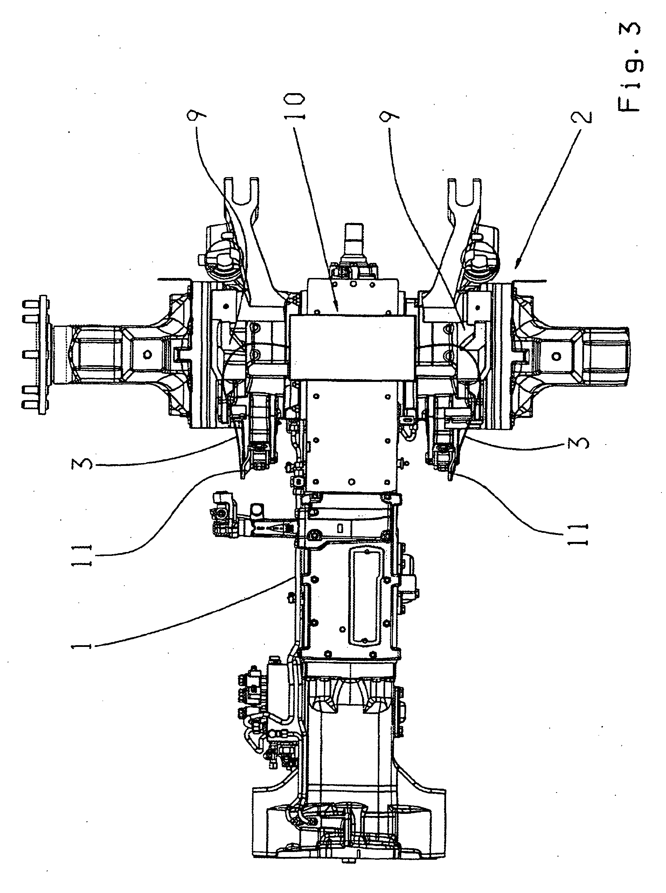

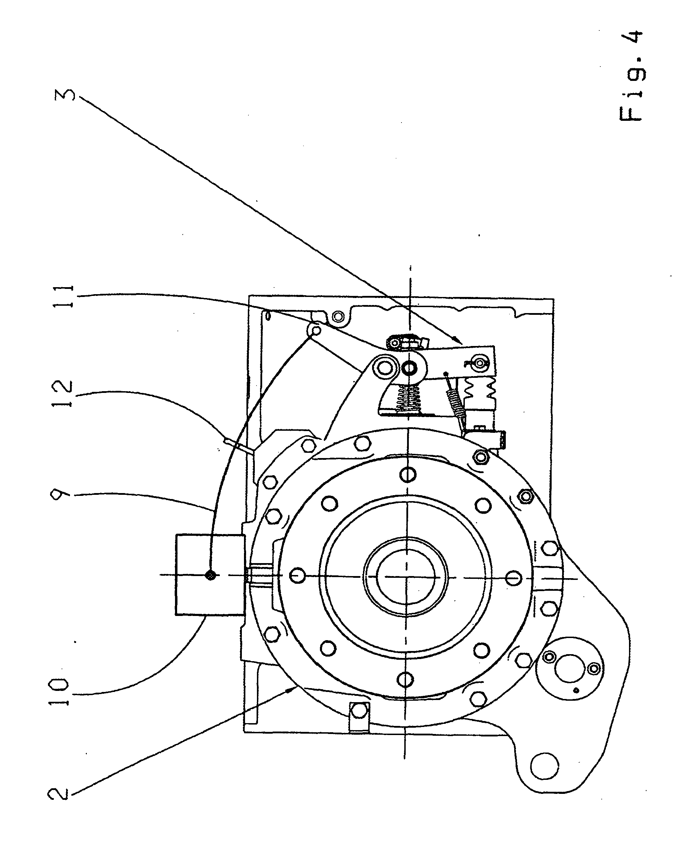

Bei der in Figuren 3 und 4 gezeigten Ausführungsform der Erfindung ist anstelle eines Einfach - Seilziehers ein Zweifach - Seilzieher 10 vorgesehen, welcher gleichzeitig zwei Handbremsseile bzw. Bowdenzüge 9 betätigt. Hierbei wirken die Handbremsseile bzw. Bowdenzüge 9 auf einen jeweils mit einem Radbremszylinder 3 wirkverbundenen Hebel 11. Figur 4 zeigt die erfindungsgemäße Anordnung für einen Radbremszylinder 3, wobei die Abstützung für den Bowdenzug 9 mit dem Bezugszeichen 12 versehen ist.

Gemäß der Erfindung ist vorgesehen, dass die aktuelle Bremskraft anhand der Stromaufnahme des Elektromotors des zumindest einen Seilziehers 7, 10 bzw. des elektromechanischen Aktuators ermittelt wird, wobei der Zusammenhang zwischen der Stromaufnahme des Elektromotors und der Bremskraft in Form einer Kennlinie in der Steuerung des Elektromotors oder der Parkbremse abgelegt sein kann. Hierbei kann der Elektromotor in vorgegebenen Zeitintervallen eingeschaltet werden, um anhand der Stromaufnahme die aktuelle Bremskraft zu ermitteln. Entspricht die aktuelle Bremskraft nicht der vorgegebenen Bremskraft, so wird die Bremse mittels des Elektromotors nachgezogen, bis die Stromaufnahme des Elektromotors der Stromaufnahme bei der vorgegebenen Bremskraft entspricht.

### Bezugszeichen

1 Getriebe
2 Hinterachse
3 Radbremszylinder
4 Welle
5 Hebel
6 Bowdenzug
7 Seilzieher
8 Koppelelement
9 Bowdenzug
10 Zweifach - Seilzieher
11 Hebel
12 Abstützung

## Patentansprüche

1. Traktor mit einem Getriebe, welches abtriebsseitig mit einer Hinterachse verbunden ist, welche für jedes Rad eine nasse Lamellenbremse umfasst, bei der eine Kraft durch einen Radbremszylinder auf die Lamellenbremse übertragen wird und mit einer Parkbremse, wobei die Parkbremse zumindest eine elektrisch betätigbare Einrichtung (7, 10) zum Einlegen der Parkbremse mit vorgegebener Kraft und zum Lösen der Parkbremse umfasst, welche bei einem Nachlassen der Bremskraft die Parkbremse nachzieht, wobei die elektrisch betätigbare Einrichtung auf ein zumindest mit dem Radbremszylinder (3) wirkendes Hebelsystem bzw. Hebel (5) wirkt und die elektrisch betätigbare Einrichtung als elektrisch betätigbarer Seilzieher mit einem Elektromotor oder als elektromechanischer Aktuator ausgeführt ist und eine aktuelle Bremskraft anhand einer Stromaufnahme des Elektromotors des Seilziehers (7) bzw. des elektromechanischen Aktuators ermittelbar ist, wobei, wenn die aktuelle Bremskraft nicht der vorgegebenen Bremskraft entspricht, die Parkbremse mittels des Elektromotors nachgezogen wird, bis die Stromaufnahme des Elektromotors der Stromaufnahme bei der vorgegebenen Bremskraft entspricht.

2. Traktor nach Anspruch 1, **dadurch gekennzeichnet, dass** die zumindest eine elektrisch betätigbare Einrichtung (7) als elektrisch betätigbarer Seilzieher (7) ausgeführt ist, welcher über einen Bowdenzug (6) bzw. ein Handbremsseil mit dem auf zumindest einen Radbremszylinder (3) wirkenden Hebelsystem bzw. Hebel (5) verbunden ist.

3. Traktor, nach Anspruch 1, **dadurch gekennzeichnet, dass** die zumindest eine elektrisch betätigbare Einrichtung (7) als elektrisch betätigbarer Zweifach - Seilzieher (10) ausgeführt ist, der gleichzeitig zwei Handbremsseile bzw. Bowdenzüge (9) betätigt, wobei die Handbremsseile bzw. Bowdenzüge (9) jeweils auf einen jeweils mit einem Radbremszylinder (3) wirkverbundenen Hebel (11) wirken.

4. Traktor nach Anspruch 2 oder 3, **dadurch gekennzeichnet, dass** der Antrieb des Seilziehers (7, 10) als selbsthemmendes Schneckengetriebe ausgeführt ist.

5. Traktor nach Anspruch 1, **dadurch gekennzeichnet, dass** die zumindest eine elektrisch betätigbare Einrichtung (7) als linearer elektromechanischer Aktuator ausgeführt ist, welcher mit dem auf zumindest einen Radbremszylinder (3) wirkenden Hebelsystem bzw. Hebel (5) verbunden ist.

6. Traktor nach Anspruch 5, **dadurch gekennzeichnet, dass** der elektromechanische Aktuator als elektromotorisch angetriebenes Spindelgetriebe ausgeführt ist, dessen Gewindespindel mit dem auf zumindest einen Radbremszylinder (3) wirkenden Hebelsystem bzw. Hebel (5) verbunden ist.

7. Traktor nach Anspruch 2, 4, 5 oder 6, **dadurch gekennzeichnet, dass** das Hebelsystem einen mit dem Bowdenzug (6) bzw. mit dem Handbremsseil bzw. mit dem elektromechanischen Aktuator verbundenen Hebel (5) umfasst, welcher mit einer Welle (4) drehfest verbunden ist, wobei die Welle (4) über zwei Koppelelemente (8) auf die Radbremszylinder (3) wirkt.

8. Traktor nach Anspruch 1, **dadurch gekennzeichnet, dass** für jeden Radbremszylinder (3) ein Hebel (11) vorgesehen ist, welcher einerseits mit einem Bowdenzug (6) bzw. dem Handbremsseil bzw. mit einem linearen elektromechanischen Aktuator verbunden und andererseits mit dem Radbremszylinder (3) wirkverbunden ist, wobei jedem Hebel ein Bowdenzug (9) bzw. Handbremsseil bzw. ein linearer elektromechanischer Aktuator zugeordnet ist.

9. Traktor nach einem der vorangehenden Ansprüche, **dadurch gekennzeichnet, dass** die Parkbremse mittels der Betätigung eines Knopfes bzw. eines Schalters einlegbar und lösbar ist.

10. Traktor nach einem der vorangehenden Ansprüche, **dadurch gekennzeichnet, dass** die Parkbremse anhand der Signale eines Wegsensors am Kupplungspedal des Fahrzeugs proportional zum Weg des Kupplungspedals lösbar ist, so dass das Anfahren am Berg automatisiert und ein ungewolltes Rollen des Fahrzeugs nach hinten verhindert wird.

## Claims

1. Tractor having a transmission which is connected at the drive output side to a rear axle which, for each wheel, comprises a wet multiplate brake, wherein a force is transmitted to the multiplate brake by a wheel brake cylinder, and having a parking brake, wherein the parking brake comprises at least one electrically actuable device (7, 10) for engaging the parking brake with a predefined force and for releasing the parking brake, which device re-tightens the parking brake in the event of a decrease in the braking force, wherein the electrically actuable device acts on a lever system or lever (5) which acts at least with the wheel brake cylinder (3), and the electrically actuable device is designed as an electrically actuable cable puller with an electric motor or as an electromechanical actuator, and a present braking force can be determined on the basis of a current consumption of the electric motor of the cable puller (7) or of the electromechanical actuator, wherein if the actual braking force does not correspond to the predefined braking force, the parking brake is re-tightened by means of the electric motor until the current consumption of the electric motor corresponds to the current consumption at the predefined braking force.

2. Tractor according to Claim 1, **characterized in that** the at least one electrically actuable device (7) is designed as an electrically actuable cable puller (7) which is connected via a Bowden cable (6) or a handbrake cable to the lever system or lever (5) which acts on at least one wheel brake cylinder (3).

3. Tractor according to Claim 1, **characterized in that** the at least one electrically actuable device (7) is designed as an electrically actuable double cable puller (10) which simultaneously actuates two handbrake cables or Bowden cables (9), with the handbrake cables or Bowden cables (9) in each case acting on a lever (11) which is operatively connected in each case to a wheel brake cylinder (3).

4. Tractor according to Claim 2 or 3, **characterized in that** the drive of the cable puller (7, 10) is designed as a self-locking worm gear mechanism.

5. Tractor according to Claim 1, **characterized in that** the at least one electrically actuable device (7) is designed as a linear electromechanical actuator which is connected to the lever system or lever (5) which acts on at least one wheel brake cylinder (3).

6. Tractor according to Claim 5, **characterized in that** the electromechanical actuator is designed as an electromotively driven spindle gearing whose threaded spindle is connected to the lever system or lever (5) which acts on at least one wheel brake cylinder (3).

7. Tractor according to Claim 2, 4, 5 or 6, **characterized in that** the lever system comprises a lever (5) which is connected to the Bowden cable (6) or to the handbrake cable or to the electromechanical actuator and which is connected to a shaft (4) for conjoint rotation therewith, with the shaft (4) acting on the wheel brake cylinder (3) via two coupling elements (8).

8. Tractor according to Claim 1 or 5, **characterized in that**, for each wheel brake cylinder (3), a lever (11) is provided which is connected at one side to a Bowden cable (6) or the handbrake cable or to a linear electromechanical actuator and is operatively connected at the other side to the wheel brake cylinder (3), with each lever being assigned a Bowden cable (9) or handbrake cable or a linear electromechanical actuator.

9. Tractor according to one of the preceding claims, **characterized in that** the parking brake can be engaged and released by means of the actuation of a button or a switch.

10. Tractor according to one of the preceding claims, **characterized in that** the parking brake can, on the basis of the signals of a travel sensor on the clutch pedal of the motor vehicle, be released proportionally to the travel of the clutch pedal such that hill-starting is automated and undesired backward rolling of the motor vehicle is prevented.

## Revendications

1. Tracteur comprenant une transmission qui est connectée du côté de la sortie à un essieu arrière qui comprend pour chaque roue un frein à disques humide, une force étant transmise par un cylindre de frein de roue au frein à disques, et comprenant un frein de stationnement, le frein de stationnement comprenant au moins un dispositif à commande électrique (7, 10) pour serrer le frein de stationnement avec une force prédéfinie et pour relâcher le frein de stationnement, lequel, lors d'un relâchement de la force de freinage, resserre le frein de stationnement, le dispositif à commande électrique agissant sur un système de levier ou un levier (5) agissant au moins avec le cylindre de frein de roue (3) et le dispositif à commande électrique étant réalisé sous forme de dispositif de traction par câble à commande électrique avec un moteur électrique ou sous forme d'actionneur électromécanique, et une force de freinage actuelle pouvant être déterminée à l'aide d'une consommation de courant du moteur électrique du dispositif de traction de câble (7) ou de l'actionneur électromécanique, et, lorsque la force de freinage actuelle ne correspond pas à la force de freinage prédéfinie, le frein de stationnement étant resserré au moyen du moteur électrique jusqu'à ce que la consommation de courant du moteur électrique corresponde à la consommation de courant dans le cas de la force de freinage prédéfinie.

2. Tracteur selon la revendication 1, **caractérisé en ce qu'**au moins un dispositif à commande électrique (7) est réalisé sous forme de dispositif de traction de câbles (7) à commande électrique, qui est connecté par le biais d'un câble Bowden (6) ou d'un câble de frein à main au système de levier ou un levier (5) agissant au moins sur un cylindre de frein de roue (3).

3. Tracteur selon la revendication 1, **caractérisé en ce que** l'au moins un dispositif à commande électrique (7) est réalisé sous forme de dispositif de traction de câbles doubles à commande électrique (10) qui commande simultanément deux des huit câbles de frein à main ou deux câbles Bowden (9), les câbles de frein à main ou les câbles Bowden (9) agissant à chaque fois sur un levier (11) connecté fonctionnellement à un cylindre de frein de roue respectif (3).

4. Tracteur selon la revendication 2 ou 3, **caractérisé en ce que** l'entraînement du dispositif de traction des câbles (7, 10) est réalisé sous forme de transmission à vis sans fin auto-bloquante.

5. Tracteur selon la revendication 1, **caractérisé en ce que** l'au moins un dispositif à commande électrique (7) est réalisé sous forme d'actionneur électromécanique linéaire, qui est connecté au système de levier ou à un levier (5) agissant sur au moins un cylindre de frein de roue (3).

6. Tracteur selon la revendication 5, **caractérisé en ce que** l'actionneur électromécanique est réalisé sous forme de transmission à broche entraînée par un moteur électrique, dont la broche filetée est connectée au système de levier ou à un levier (5) agissant sur au moins un cylindre de frein de roue (3).

7. Tracteur selon les revendications 2, 4, 5 ou 6, **caractérisé en ce que** le système de levier comprend un levier (5) connecté au câble Bowden (6) ou au câble de frein à main ou à l'actionneur électromécanique, lequel levier est connecté à un arbre (4), l'arbre (4) agissant par le biais de deux éléments d'accouplement (8) sur les cylindres de frein de roue (3).

8. Tracteur selon la revendication 1 ou 5 **caractérisé en ce que** pour chaque cylindre de frein de roue (3) il est prévu un levier (11) qui est connecté d'une part à un câble Bowden (6) ou au câble de frein à main ou à un actionneur électromécanique linéaire et qui est connecté fonctionnellement d'autre part au cylindre de frein de roue (3), à chaque levier étant associé un câble Bowden (9) ou un câble de frein à main ou un actionneur électromécanique linéaire.

9. Tracteur selon l'une quelconque des revendications précédentes, **caractérisé en ce que** le frein de stationnement peut être enclenché ou relâché au moyen de l'actionnement d'un bouton ou d'un commutateur.

10. Tracteur selon l'une quelconque des revendications précédentes, **caractérisé en ce que** le frein de stationnement peut être relâché proportionnellement à la course de la pédale d'embrayage à l'aide des signaux d'un capteur de course sur la pédale d'embrayage du véhicule, de sorte que le démarrage en montée s'effectue d'une manière automatisée et qu'un roulement vers l'arrière indésirable du véhicule soit évité.
